# EUROPEAN PATENT APPLICATION

(11) **EP 3 239 474 A1**
(43) Date of publication of application: **01.11.2017**
(21) Application number: 17168416.0
(22) Date of filing: 27.04.2017
(51) Int. Cl.: F01D 11/00

(54) **TURBINE SEAL REPAIR PATCH AND METHODS OF REPAIRING TURBINE SEALS**

(30) Priority: 27.04.2016 US 201615139728
(71) Applicant: General Electric Company, Schenectady, NY 12345 (US)
(72) Inventor: WORD, Jacob Wade, Greenville, SC 29615 (US); KIDDER, Kyle Lee, Greenville, SC 29615 (US); HENDERSON, Brian Leslie, Greenville, SC 29615 (US); COOK, Paul Albert, Greenville, SC 29615 (US)
(74) Representative: Pöpper, Evamaria

(57) **Abstract**

A repair patch (200) for use with a turbine seal (116) includes a shim (204) having a first side (212) and an opposite second side (214) and a cloth seal (202) having a first section (206) and a second section (208). The cloth seal (202) is coupled to the shim (204), such that the cloth seal (202) is folded over a radial edge (210) of the shim (204) such that the first section (206) substantially covers the first side (212) and the second section (208) substantially covers the second side (214). The second section (208) includes an extension section (218) that extends from the second side (214) such that at least a portion of the cloth seal (202) overlaps at least a portion of the turbine seal (116) when coupled thereto.

## Description

### BACKGROUND

The present disclosure relates generally to rotary engines and, more specifically, to turbine seals used with rotary engines.

Generally rotary engine assemblies include a compressor, a combustor, and a turbine coupled in a serial flow relationship. The compressor compresses air from an air intake, and subsequently directs the compressed air to the combustor. Compressed air received from the compressor is mixed with a fuel and is combusted to create combustion gases that are directed into the turbine. In the turbine, the combustion gases flow pass turbine blades of the turbine, thereby driving the turbine blades, and a shaft to which the turbine blades are attached, into rotation. The rotation of the shaft may further drive a load, such as an electrical generator, coupled to the shaft.

At least some known rotary engine assemblies include a plurality of combustors oriented in an annular arrangement around a central axis of the rotary engine. Each combustor directs combustion products through a respective transition piece into the turbine. Seals may be positioned between the plurality of combustors and the turbine to seal the flow path of combustion gases and to reduce leakage thereof. The seals, also known as floating seals, can vibrate during rotary engine operation, causing wear and deterioration to the seal components. Overtime, worn seals can allow leakage of combustion gases through the transition piece or even fail causing a reduction in rotary engine performance. At least some known repair methods require full replacement of the seal components, which increases rotary engine repair and maintenance costs, and which can only be replaced while the rotary engine is off line.

### BRIEF DESCRIPTION

In one aspect, a repair patch for use with a turbine seal is provided. The repair patch includes a shim having a first side and an opposite second side and a cloth seal having a first section and a second section. The cloth seal is coupled to the shim, such that the cloth seal is folded over a radial edge of the shim such that the first section substantially covers the first side and the second section substantially covers the second side. The second section includes an extension section that extends from the second side such that at least a portion of the cloth seal overlaps at least a portion of the turbine seal when coupled thereto.

In a further aspect, a turbine seal for use with a turbine is provided. The turbine seal includes a frame, a backing strip, a first shim, and a first cloth seal. The first cloth seal at least partially surrounds the first shim, and the first shim and the first cloth seal are at least partially coupled between the frame and the backing strip, wherein at least a portion of the frame extends circumferentially beyond the first shim and the first cloth seal. The turbine seal further includes a repair patch coupled adjacent to the portion of the frame. The repair patch includes a second shim having a first side and an opposite second side, and a second cloth seal having a first section and a second section. The second cloth seal is coupled to the second shim, such that the second cloth seal is folded over a radial edge of the second such that the first section substantially covers the first side and the second section substantially covers the second side. The second section includes an extension section that extends from the second side such that at least a portion of the second cloth seal overlaps at least a portion of the first cloth seal.

In another aspect, a method for repairing a turbine seal is provided. The method includes removing a damaged area of the turbine seal. The turbine seal includes a frame, a backing strip, a first shim, and a first cloth seal that at least partially surrounds the first shim, wherein the first shim and the first cloth seal are at least partially coupled between the frame and the backing strip, and wherein the damaged area extends circumferentially adjacent to at least a portion of the frame. The method further includes coupling a repair patch adjacent to the portion of the frame. The repair patch includes a second shim having a first side and an opposite second side, and a second cloth seal having a first section and a second section. The second cloth seal is coupled to the second shim, such that the second cloth seal is folded over a radial edge of the second shim such that the first section substantially covers the first side and the second section substantially covers the second side. The second section includes an extension section that extends from the second side such that at least a portion of the second cloth seal overlaps at least a portion of the first cloth seal.

### BRIEF DESCRIPTION OF THE DRAWINGS

FIG. 1 is a block diagram of an exemplary rotary engine;
FIG. 2 is a partial schematic view of an exemplary seal assembly that may be used in the rotary engine shown in FIG. 1;
FIG. 3 is a perspective view of an exemplary radial seal that may be used with the seal assembly shown in FIG 2;
FIG. 4 is a cross-sectional view of the radial seal shown in FIG. 3 taken along line 4-4;
FIG. 5 is an enlarged view of a portion of FIG. 4 taken along area 5;
FIG. 6 is an exploded view of an exemplary repair patch that may be used with the radial seal shown in FIGS. 2-5;
FIG. 7 is a schematic view of the repair patch shown in FIG. 6 coupled to the radial seal shown in FIGS. 2-5; and
FIG. 8 is a flow diagram of an exemplary method of repairing a radial seal, such as the radial seal shown in FIGS. 2-5.

### DETAILED DESCRIPTION OF THE INVENTION

Unless otherwise indicated, approximating language, such as "generally," "substantially," and "about," as used herein indicates that the term so modified may apply to only an approximate degree, as would be recognized by one of ordinary skill in the art, rather than to an absolute or perfect degree. Approximating language may be applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value. Here and throughout the specification and claims, range limitations may be identified. Such ranges may be combined and/or interchanged, and include all the sub-ranges contained therein unless context or language indicates otherwise.

Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

As used herein, the terms "axial" and "axially" refer to directions and orientations extending substantially parallel to a longitudinal axis of a rotary machine. Moreover, the terms "radial" and "radially" refer to directions and orientations extending substantially perpendicularly to the longitudinal axis of the rotary machine. In addition, as used herein, the terms "circumferential" and "circumferentially" refer to directions and orientations extending arcuately about the longitudinal axis of the rotary machine. In addition, although embodiments of the disclosure are described with reference to components of rotary machines, it should be understood that the scope of the disclosure encompasses any suitable component of any suitable structure for which the embodiments are enabled to function as described herein.

The exemplary repair patch for use with a turbine seal and methods to repair the turbine seal described herein overcome at least some of the disadvantages associated with known seal repairs within a rotary engine. The embodiments herein include a repair patch having a shim and a cloth seal that substantially covers the shim. After removing a damaged area from the turbine seal, the repair patch is coupled thereto. A portion of the cloth seal extends from the shim such that when the repair patch is coupled to the turbine seal, fluid leakage is facilitated to be reduced while a stiffness of the turbine seal is maintained. In certain embodiments, the repair patch is coupled to the turbine seal such that wear against the connection joint is facilitated to be reduced, thereby increasing the life-cycle of the repair patch. In some embodiments, the repair patch facilitates a standardized repair of the turbine seal such that the entire turbine seal is not replaced. In such embodiments, the repair patch enables the turbine seal to be repaired, rather than entirely replaced after incurring damage and thus rotary engine repair and maintenance costs are facilitated to be reduced.

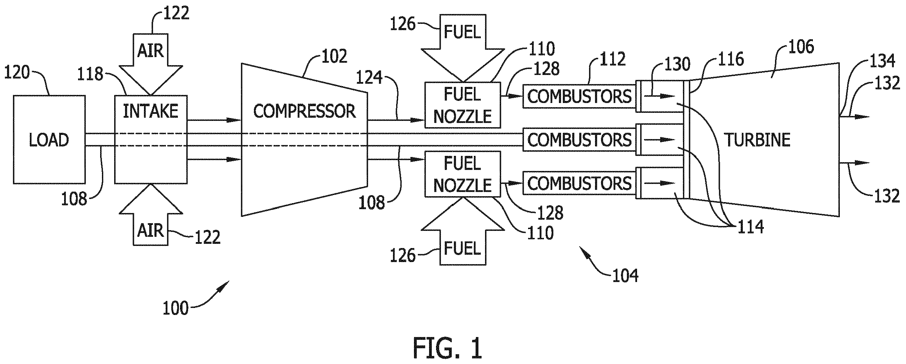

FIG. 1 is a block diagram of an exemplary embodiment of a rotary engine system 100. Rotary engine 100 includes a compressor assembly 102. A combustor assembly 104 is downstream from, and in flow communication with, compressor assembly 102, and a turbine assembly 106 is downstream from, and in flow communication with, combustor assembly 104. Turbine assembly 106 is coupled to compressor assembly 104 via a rotor assembly 108. Combustor assembly 104 includes fuel nozzles 110 upstream from, and in flow communication with, combustors 112. Turbine assembly 106 is coupled to combustor assembly 104 via transition pieces 114 and one or more seal assemblies 116. Further, in the exemplary embodiment rotary engine 100 includes an intake 118 and a load 120.

In operation, air 122 is channeled through intake 118 and into compressor assembly 102. Compressor assembly 102 compresses air 122 to higher pressures and temperatures and discharges compressed air 124 towards combustor assembly 104. At combustor assembly 104, compressed air 124 is mixed with fuel 126, channeled from fuel nozzles 110, forming a mixture 128 that flows into combustors 112. Mixture 128 is burned within combustors 112 generating combustion gases 130 that are channeled downstream through transition pieces 114 and seal assembly 116 into turbine assembly 106. As combustion gases 130 impinge turbine assembly 106, thermal energy is converted to mechanical rotational energy that is used to drive rotor assembly 108 and, for example, power external mechanical load 120. The flow of combustion gases 130 is discharged from turbine assembly 106 as exhaust gases 132 via an exhaust outlet 134.

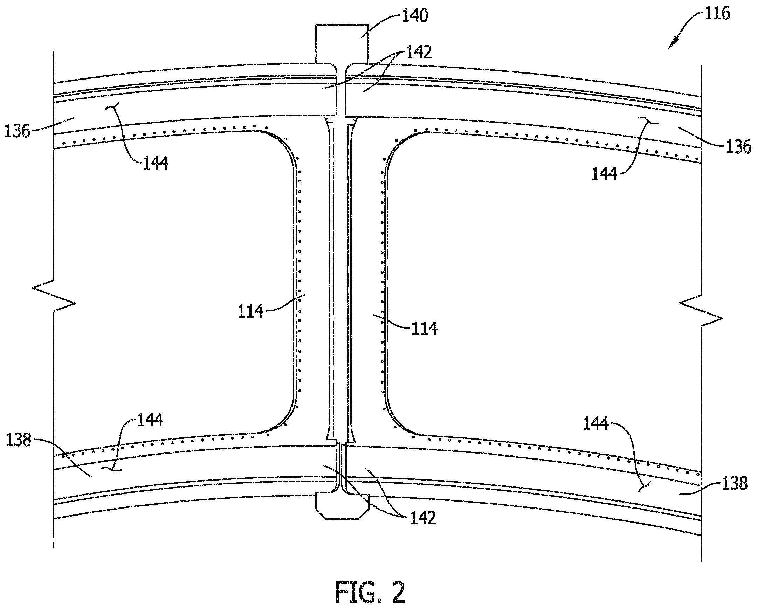

FIG. 2 is a partial schematic view of an exemplary seal assembly 116 that may be used in rotary engine 100 (shown in FIG. 1). In the exemplary embodiment, combustors 112 (shown in FIG. 1) are spaced annularly about rotor assembly 108 with a corresponding transition piece 114 extending between each respective combustor 112 and turbine assembly 106 (shown in FIG. 1). Additionally, seal assembly 116 extends between each transition piece 114 and turbine assembly 106 in an annular arrangement. In the exemplary embodiment, seal assembly 116 includes at least one radially outer seal or turbine seal 136, at least one radially inner seal or turbine seal 138, and at least one side seal 140.

In operation, combustion gases 130 (shown in FIG. 1) generated within combustor 112 are channeled towards turbine assembly 106. Transition pieces 114 receive and direct combustion gases 130 exiting combustor 112 towards a turbine nozzle (not shown) within turbine assembly 106. Seal assembly 116 substantially blocks combustion gases 130 from escaping rotary engine system 100. More specifically, seal assembly 116 sealingly engages with at least a portion of each transition piece 114 such that substantially all combustion gases 130 flow into turbine assembly 106. For example, radially outer seal 136 creates a sealing interface between transition piece 114 and an outer diameter of the turbine nozzle. Similarly, radially inner seal 138 creates a sealing interface between transition piece 114 and an inner diameter of the turbine nozzle. Moreover, side seal 140 creates a sealing interface between two adjacent transition pieces 114 in the radial direction. In the exemplary embodiment, radially outer seal 136 is formed similarly to radially inner seal 138. Alternatively, radially outer seal 136 may be formed differently from radially inner seal 138.

Within engine system 100, seal assembly 116 is movable or "floats" to accommodate axial and radial movement of the turbine nozzle. Specifically, radially outer seal 136, radially inner seal 138, and side seal 140 are moveable independent of each other. Movement within seal assembly 116 can cause both radial seals 136 and 138 to experience wear due to abrasive contact with transition piece 114 and/or side seal 140. Specifically, a circumferential end 142 of radial seal 136 and/or 138 may experience wear from contact with side seal 140. Additionally, an interior region 144 of radial seal 136 and/or 138 may experience wear from contact with transition piece 114. Depending on an amount of wear, radial seal 136 and/or 138 may need to be replaced and/or repaired within rotor engine system 100.

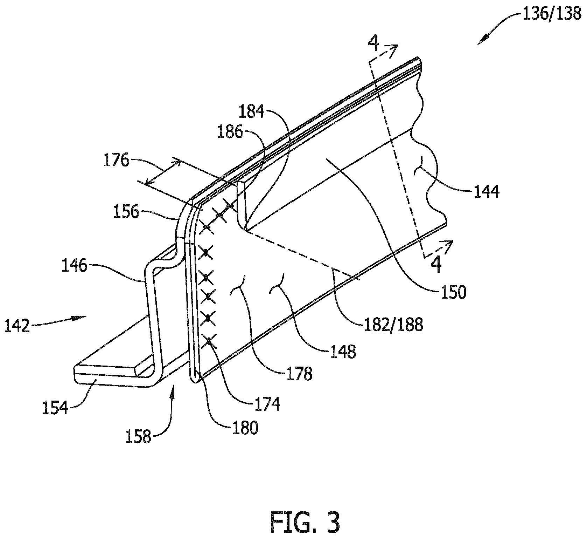

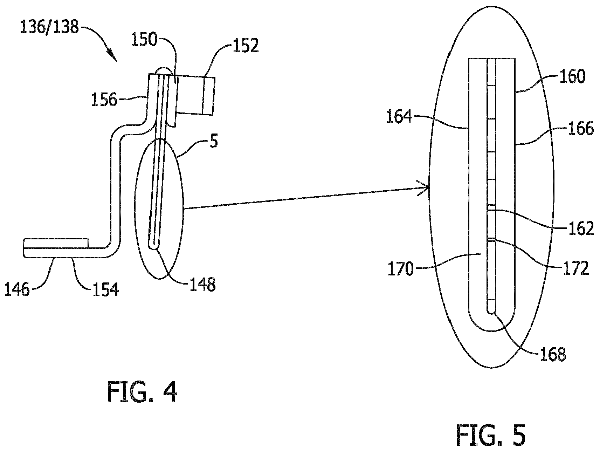

FIG. 3 is a perspective view of an exemplary radial seal 136 and/or 138 that may be used with seal assembly 116 (shown in FIG. 2). FIG. 4 is a cross-sectional view of radial seal 136 and/or 138 taken along cut line 4-4 (shown in FIG. 3). FIG. 5 is an enlarged view of FIG. 4 taken along area 5. Referring to FIGS. 3-5, radial seal 136 and/or 138 includes a seal holder or frame 146, a seal shim assembly 148, a backing strip 150, and a retainer 152. Seal shim assembly 148 is coupled between frame 146 and backing strip 150. Specifically, frame 146 has a general "L"-shape with a first end 154 that extends towards turbine assembly 106 when coupled to transition piece 114 and a second end 156 that extends radially and couples to seal shim assembly 148. A gap 158 defined between frame 146 and seal shim assembly 148 is sized to enable a portion of transition piece 114 to be coupled therein. Adjacent to frame second end 156, backing strip 150 is coupled to seal shim assembly 148. Retainers 152 extend from backing strip 150 towards combustor 112 to facilitate positioning radial seal 136 and/or 138 along transition piece 114.

Seal shim assembly 148 includes a cloth seal 160 and a shim 162. Cloth seal 160 has a first section 164 and a second section 166 that are each folded over shim 162 about a radial edge 168 of shim 162, such that shim 162 is sandwiched between first and second sections 164 and 166. Specifically, shim 162 has a first radially extending side 170 and an opposite second radially extending side 172. First section 164 substantially covers first side 170, and second section 166 substantially covers second side 172. Cloth seal 160 and shim 162 are coupled together via spot welds 174 along circumferential end 142. In the exemplary embodiment, shim 162 includes two metal shims sandwiched between cloth seal 160. Alternatively, any number of shims 162 may be used that enables seal assembly 116 to function as described herein. Moreover, in the exemplary embodiment, cloth seal 160 is formed from a metallic cloth. Alternatively, cloth seal 160 may be formed from any other material that enables seal assembly 116 to function as described herein. Cloth seal 160 and shim 162 facilitate restricting fluid leakage from transition piece 114.

In the exemplary embodiment, frame 146, cloth seal 160, and shim 162 each extend to circumferential end 142 of radial seal 136 and/or 138. Backing strip 150 is offset a distance 176 from circumferential end 142. It should be appreciated that while only one circumferential end 142 is shown in FIG. 3 and described herein, each radial seal 136 and/or 138 has an opposite circumferential end that is substantially similar to circumferential end 142.

During operation of engine 100, wear from side seal 140 against radial seal 136 and/or 138 may occur within seal shim assembly 148. Specifically, overtime, cloth seal 160 may be abraded and shim 162 may become damaged and/or distorted. When damage at circumferential end 142 occurs, rather than replacing the entire radial seal 136 and/or 138, a removal area 178 may be removed and replaced, as described further below, thereby decreasing repair and maintenance costs.

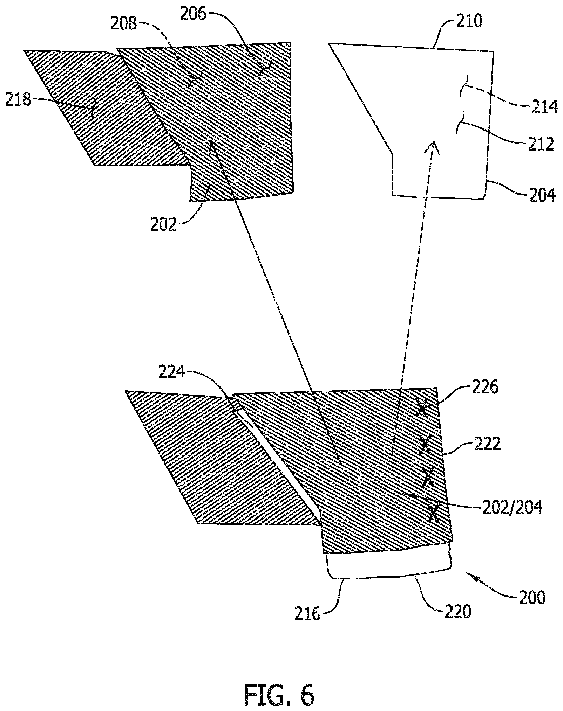

Removal area 178 is defined as an area on seal shim assembly 148 between a circumferential edge 180 and a line 182 extending generally at an acute angle within a range from approximately 30° to approximately 60° from a corner 184 of backing strip 150. Specifically, acute angle is a 45° angle. In the exemplary embodiment, damage within seal shim assembly 148 generally occurs between edge 180 and an edge 186 of backing strip 150. However, in the exemplary embodiment, removal area 178 extends to line 182. Extending removal area 178 further past the damage to seal shim assembly 148 facilitates increasing the overall size of the repair and a stronger repair of radial seal 136 and/or 138, as will be described further below in reference to FIG. 6. Alternatively, line 182 may extend in any suitable direction that enables damage on seal shim assembly 148 to be removed and replaced.

In the exemplary embodiment, when damage occurs and repair is needed, a portion of seal shim assembly 148 is removed from radial seal 136 and/or 138. Specifically, damage area 178 is removed from seal shim assembly 148, for example, using a cut off wheel with a guide block that facilitates a consistent cut at a consistent location. Seal shim assembly 148, including both cloth seal 160 and shim 162, is cut along line 182 to backing strip corner 184 and also along backing strip edge 186. Further, seal shim assembly 148 is cut from frame second end 156 along offset 176, thereby decoupling damaged area 178 from radial seal 136 and/or 138 and forming a new circumferential edge 188 along line 182. Alternatively, damaged area 178 may be removed with any other method and/or cutting tool that enables damaged area 178 to be removed as described herein.

Additionally, during operation of engine 100 wear from transition piece 114 against radial seal 136 and/or 138 may occur within seal shim assembly 148, causing cloth seal 160 to be abraded within interior region 144. In some embodiments, rather than replacing the entire radial seal 136 and/or 138, at least a portion of cloth seal 160 adjacent to damaged interior region 144 is spot welded, such as via a resistance welder, such that additional damage to cloth seal 160 is reduced by restricting further fraying and/or abrading of cloth seal 160. Alternatively, damaged interior region 144 may be repaired using any other suitable procedure that enables radial seal 136 and/or 138 to function as described herein.

FIG. 6 is a schematic view of an exemplary repair patch 200 that may be used with radial seal 136 and/or 138 (shown in FIGS. 2-5). In the exemplary embodiment, repair patch 200 includes a cloth seal 202 and a shim 204. Similar to seal shim assembly 148 (shown in FIGS. 3-5), cloth seal 202 has a first section 206 and a second section 208 that are folded over shim 204 about a radial edge 210 of shim 204. As such, shim 204 is sandwiched between first and second sections 206 and 208 of cloth seal 202. Specifically, shim 204 has a first radially extending side 212 and an opposite second radially extending side 214. First section 206 substantially covers first side 212 except for a coupling section 216 of first side 212 that aligns with frame 146 to facilitate coupling of repair patch 200 to frame 146 (shown in FIGS. 3 and 4). Second section 208 substantially covers second side 214. Further, second section 208 of cloth seal 202 includes an extension section 218 that extends circumferentially outward from second side 214. Specifically, extension section 218 overlaps a portion of second section 166 of cloth seal 160 when repair patch 200 is coupled to seal shim assembly 148. In the exemplary embodiment, extension section 218 is generally shaped as a parallelogram. In alternative embodiments, extension section 218 may have any suitable shape that enables repair patch 200 to function as described herein.

In the exemplary embodiment, shim 204 includes two metallic shims sandwiched between cloth seal 202. Alternatively, any number of shims 204 may be used that enables repair patch 200 to function as described herein. Moreover, in the exemplary embodiment, cloth seal 202 is formed from a single piece of metallic cloth, similar to the metallic cloth of cloth seal 160. Alternatively, cloth seal 202 may be formed from any material that enables repair patch 200 to function as described herein.

In the exemplary embodiment, repair patch 200 has a radial edge 220 adjacent to coupling section 216 that facilitates coupling repair patch 200 to frame 146 of radial seal 136 and/or 138. Additionally, repair patch 200 has a first circumferential edge 222 and an opposite second circumferential edge or coupling edge 224 that substantially mirrors circumferential edge 188 of radial seal 136 and/or 138. Specifically, second circumferential edge 224 extends generally at an acute angle relative to first circumferential edge 222 such that second circumferential edge 224 is complementary to the circumferential edge 188 formed by removing the damaged area from seal shim assembly 148, as described above in reference to FIG. 3. For example, circumferential edge 188 extends at an angle within a range from approximately 30° to approximately 60°, and specifically at a 45° angle, as described above, and second circumferential edge 224 extends at a complementary angle. Moreover, repair patch 200 has approximately the same thickness as seal shim assembly 148 such that repair patch 200 extends generally flush with seal shim assembly 148 between first circumferential edge 222 and second circumferential edge 224 when coupled thereto. Alternatively, repair patch 200 has any other shape that enables repair patch 200 to function as described herein.

Cloth seal 202 is coupled to shim 204 via spot welds 226 spaced along first circumferential edge 222. Spot welds 226 fuse cloth seal 202 to shim 204 by melting the base materials together. Alternatively, cloth seal 202 is coupled to shim 204 via any other coupling method that enables repair patch 200 to function as described herein, for example, a solid continuous weld. In the exemplary embodiment, repair patch 200 is manufactured with a predetermined size such that a plurality of repair patches 200 may be manufactured in advance of the repair of radial seal 136 and/or 138. As described above in reference to FIG. 3, the damage to radial seal 136 and/or 138 is removed, for example using a cut off wheel. This ensures that removal area 178 is consistent for every repair such that repair patch 200 may be manufactured before repair of radial seals 136 and/or 138 is required.

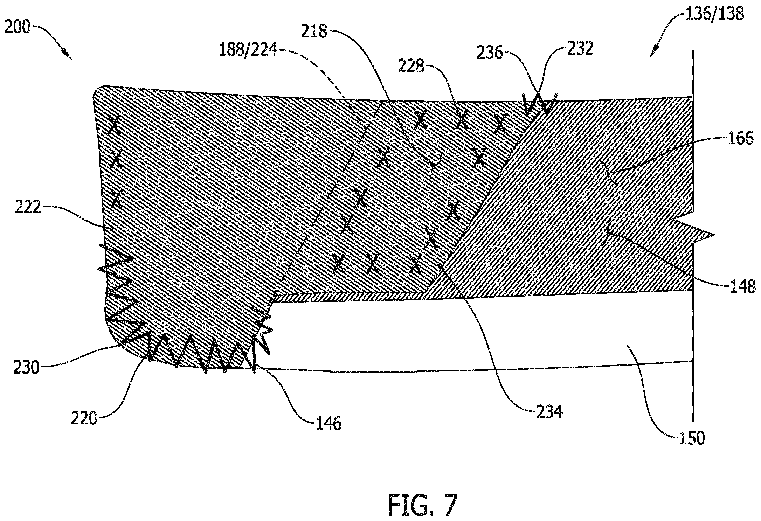

FIG. 7 is a schematic view of repair patch 200 (shown in FIG. 6) coupled to radial seal 136 and/or 138 (shown in FIGS. 2-5). In the exemplary embodiment, repair patch 200 is coupled to radial seal 136 and/or 138 via welds 228, 230, and 232. Specifically, repair patch 200 is positioned within removal area 178 of radial seal 136 and/or 138 such that second circumferential edge 224 of repair patch 200 is flush with circumferential edge 188 of seal shim assembly 148, radial edge 220 of repair patch 200 aligns with frame 146 of radial seal 136 and/or 138, and extension section 218 of repair patch 200 overlaps second section 166 of radial seal 136 and/or 138. Extension section 218 of repair patch is welded 228 to radial seal 136 and/or 138 along a perimeter 234 of extension section 218. Specifically, extension section 218 is spot welded 228 to seal shim assembly 148 such that the base materials of cloth seals 160 and 202 and shim 162 are fused together. Alternatively, extension section 218 is coupled to seal shim assembly 148 via any other method that enables radial seal 136 and/or 138 to function as described herein.

Further in the exemplary embodiment, patch radial edge 220 is welded 230 to radial seal 136 and/or 138. For example, patch radial edge 220 is Tungsten Inert Gas (TIG) welded 230 to frame 146 of radial seal 136 and/or 138 such that the base materials are fused together. Alternatively, radial edge 220 is coupled to frame 146 via any other coupling method that enables radial seal 136 and/or 138 to function as described herein. Additionally, a corner 236 of extension section 218 of repair patch 200 is welded 232 to radial seal 136 and/or 138. Specifically, corner 236 is TIG welded 232 to seal shim assembly 148 such that the base materials are fused together and stiffness and sealing is facilitated to be increased. Alternatively, corner 236 is coupled to seal shim assembly 148 via any other coupling method that enables radial seal 136 and/or 138 to function as described herein.

In some embodiments, after radial seal 136 and/or 138 is repaired with repair patch 200, the useful life of radial seal 136 and/or 138 is increased within seal assembly 116. Overlapping the connection joint between repair patch 200 and seal shim assembly 148 along circumferential edges 188 and 224 respectively, with extension section 218, facilitates increasing repair stiffness and sealing. Furthermore, in some embodiments, the overlap decreases repair time by enabling the use of a spot weld. During operation of rotary engine 100 (shown in FIG. 1), wear from side seal 140 against radial seals 136 and/or 138 generally occurs between circumferential edge 222 and backing strip 150. Coupling repair patch 200 to radial seal 136 and/or 138 near this wear area at an acute angle, such as for example substantially a 45° angle, facilitates reducing direct side seal 140 wear against the connection joint and thereby increases the useful life of repair patch 200.

In the exemplary embodiment, when repair patch 200 is coupled to radial seal 136 and/or 138, shim 162 is aligned with repair patch shim 204. It should be appreciated, however, in an alternative embodiment, shim 204 overlaps with shim 162. Alternatively, repair patch 200 may be coupled to radial seal 136 and/or 138 using any other geometry and/or welds that enables repair patch 200 to function as described herein. For example, repair patch 200 includes second section of cloth seal 208 that ends at second circumferential edge 224 such that extension section 218 is not present and repair patch 200 is tack or seam welded to radial seal 136 and/or 136. Additionally, in other embodiments, repair patch 200 is substantially rectangular shape such that second circumferential edge 224 is generally parallel to first circumferential edge 222 which is then welded to radial seal 136 and/or 138. In some embodiments, only cloth seal 160 within removal area 178 (shown in FIG. 3) is removed due to damage such that repair patch 200 includes only cloth seal 202 that is coupled to radial seal 136 and/or 138. Further, in other embodiments, repair patch 200 includes a laminate layer covering shim 204 such that cloth seal 202 is not present. In yet other embodiments, wear within removal area 178 may be repaired through welding only, for example, by building up weld within the damage area.

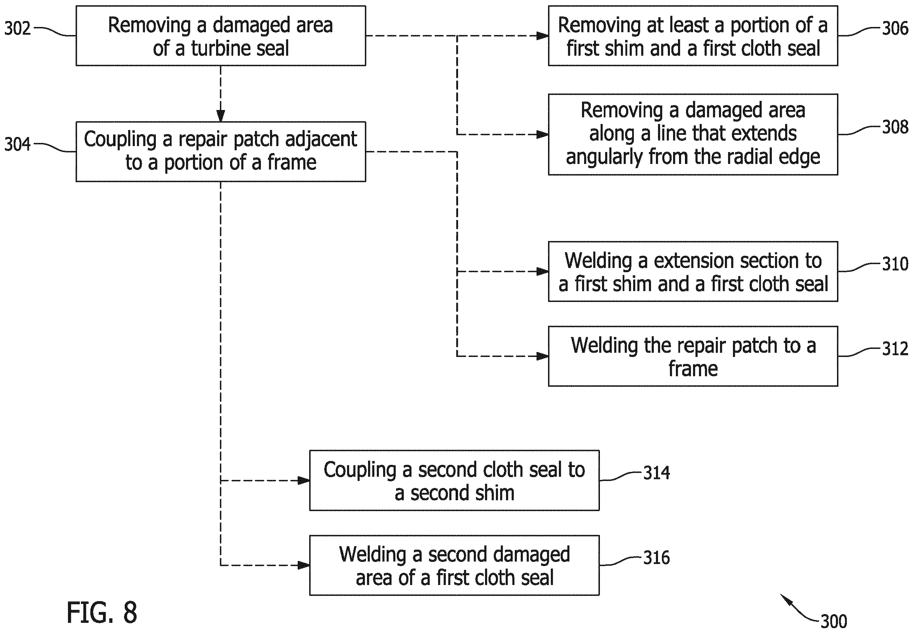

An exemplary method 300 of repairing a radial seal, such as radial seal 136 and/or 138 in engine 100, is illustrated in the flow diagram of FIG. 8. With reference also to FIGS. 1-7, method 300 includes removing 302 a damaged area, such as removal area 178. The radial seal includes a frame, such as frame 146, a backing strip, such as backing strip 150, a first shim, such as shim 162, and a first cloth seal that at least partially surrounds the first shim, such as cloth seal 160. The first shim and the first cloth seal are coupled between the frame and the backing strip such that the damaged area extends circumferentially adjacent to at least a portion of the frame. The method 300 also includes coupling 304 a repair patch, such as repair patch 200, adjacent to the portion of the frame. The repair patch includes a second shim, such as shim 204, with a first side, such as first side 212, and a second side, such as second side 214. The repair patch also includes a second cloth seal, such as cloth seal 202, having a first section, such as first section 206, and a second section, such as second section 208. The second cloth seal is folded over a radial edge of the second shim, such as radial edge 210, such that the first section substantially covers the first side and the second section substantially covers the second side and the second cloth seal is coupled to the second shim. The second section includes an extension section, such as extension section 218, which extends from the second side such that at least a portion of the second cloth seal overlaps at least a portion of the first cloth seal when coupled thereto. The repair patch is coupled to the radial seal such that fluid leakage is restricted therethrough.

Further, in some embodiments, method 300 includes removing 306 at least a portion of the first shim and the first cloth seal when the damaged area is removed. In other embodiments, method 300 includes removing 308 the damaged area along a line, such as line 182, that extends angularly from the radial edge.

Moreover, in certain embodiments, method 300 includes welding 310 the extension section to the first shim and the first cloth seal when coupling the repair patch to the remaining radial seal. In other embodiments, method 300 includes welding 312 the repair patch to the frame when coupling the repair patch to the remaining radial seal.

Additionally, in some embodiments, method 300 includes coupling 314 the second cloth seal to the second shim via a weld, such as spot weld 226, extending a distance along a circumferential edge, such as edge 222, of the repair patch. In other embodiments, method 300 includes resistance welding 316 a second damaged area of the first cloth seal, wherein the second damaged area is located on an interior portion, such as region 144, of the first cloth seal.

Exemplary embodiments of a repair patch for use with a turbine seal, and methods to repair the turbine seal, are described above in detail. The embodiments herein provide several advantages in reducing maintenance costs in a rotary machine. Specifically, the apparatus and methods described herein enable portions of the turbine seal to be repaired when damaged rather than replacing the entire seal at a higher material cost. The embodiments described herein provide advantages in that the repair patch maintains existing seal stiffness and fluid sealing functionality. The turbine seal includes a repair patch having a shim and a cloth seal that substantially covers the shim. After removing a damaged area from the turbine seal, the repair patch is coupled thereto. A portion of the cloth seal extends from the shim such that when the repair patch is coupled to the turbine seal, fluid leakage is facilitated to be reduced while a stiffness of the turbine seal is maintained. In certain embodiments, the repair patch is coupled to the turbine seal such that wear against the connection joint is facilitated to be reduced, thereby increasing the life-cycle of the repair patch. In some embodiments, the repair patch facilitates a standardized repair of the turbine seal such that the entire turbine seal is not replaced. In such embodiments, the repair patch enables the radial seal to be repaired, rather than entirely replaced, after incurring damage and thus rotary engine repair and maintenance costs are facilitated to be reduced.

Exemplary embodiments of repair patches for radial seals, and methods of using the repair patches, are described above in detail. The apparatus and methods and systems using such an apparatus, are not limited to the specific embodiments described herein, but rather, components of systems and/or steps of the methods may be utilized independently and separately from other components and/or steps described herein. For example, the exemplary embodiments can be implemented and utilized in connection with many other applications that require a radial seal to be repaired.

While the disclosure has been described in terms of various specific embodiments, those skilled in the art will recognize that the disclosure can be practiced with modification within the spirit and scope of the claims. Although specific features of various embodiments of the disclosure may be shown in some drawings and not in others, this is for convenience only. Moreover, references to "one embodiment" in the above description are not intended to be interpreted as excluding the existence of additional embodiments that also incorporate the recited features. In accordance with the principles of the disclosure, and feature of a drawing may be referenced and/or claimed in combination with any feature of any other drawing.

Various aspects and embodiments of the present invention are defined by the following clauses:
1. A repair patch for use with a turbine seal, said repair patch comprising:
   a shim comprising a first side and an opposite second side; and
   a cloth seal comprising a first section and a second section, said cloth seal is coupled to said shim, such that said cloth seal is folded over a radial edge of said shim such that said first section substantially covers said first side and said second section substantially covers said second side, said second section comprises an extension section that extends from said second side such that at least a portion of said cloth seal overlaps at least a portion of the turbine seal when coupled thereto.
2. The repair patch in accordance with clause 1, wherein said cloth seal is coupled to said shim via a weld extending a distance along a circumferential edge of said repair patch.
3. The repair patch in accordance with clause 1, wherein a coupling edge of said repair patch is defined opposite said circumferential edge, said coupling edge comprising a shim edge and a first section edge that each extend angularly from said radial edge.
4. The repair patch in accordance with clause 3, wherein said extension section comprises an edge that extends substantially parallel to said coupling edge.
5. The repair patch in accordance with clause 1, wherein said coupling edge extends at an angle within a range from approximately 30° to approximately 60° from said circumferential edge.
6. The repair patch in accordance with clause 1, wherein said shim comprises at least two shims.
7. A turbine seal for use with a turbine, said turbine seal comprising:
   a frame;
   a backing strip;
   a first shim;
   a first cloth seal at least partially surrounding said first shim, said first shim and said first cloth seal at least partially coupled between said frame and said backing strip,
   wherein at least a portion of said frame extends circumferentially beyond said first shim and said first cloth seal; and
   a repair patch coupled adjacent to said portion of said frame, said repair patch comprising:
      a second shim comprising a first side and an opposite second side; and
      a second cloth seal comprising a first section and a second section, said second cloth seal is coupled to said second shim, such that said second cloth seal is folded over a radial edge of said second shim such that said first section substantially covers said first side and said second section substantially covers said second side, said second section comprises an extension section that extends from said second side such that at least a portion of said second cloth seal overlaps at least a portion of said first cloth seal.
8. The turbine seal in accordance with clause 7, wherein said repair patch is welded to said portion of said frame.
9. The turbine seal in accordance with clause 7, wherein said extension section is welded to said first shim and said first cloth seal.
10. The turbine seal in accordance with clause 9, wherein said weld is around a perimeter of said extension section.
11. The turbine seal in accordance with clause 7, wherein said repair patch is coupled to said turbine seal along a coupling edge that is defined opposite a circumferential edge of said repair patch, said coupling edge extends angularly from said radial edge.
12. The turbine seal in accordance with clause 7, wherein said second shim comprises at least two shims.
13. The turbine seal in accordance with clause 7 further comprising a weld extending a distance along an interior damage area of said first cloth seal.
14. A method for repairing a turbine seal, said method comprising:
   removing a damaged area of the turbine seal, the turbine seal includes a frame, a backing strip, a first shim, and a first cloth seal at least partially surrounding the first shim, wherein the first shim and the first cloth seal are at least partially coupled between the frame and the backing strip, and wherein the damaged area extends circumferentially adjacent to at least a portion of the frame; and
   coupling a repair patch adjacent to the portion of the frame, the repair patch includes a second shim including a first side and an opposite second side, and a second cloth seal including a first section and a second section, the second cloth seal is coupled to the second shim, such that the second cloth seal is folded over a radial edge of the second shim such that the first section substantially covers the first side and the second section substantially covers the second side, the second section includes an extension section that extends from the second side such that at least a portion of the second cloth seal overlaps at least a portion of the first cloth seal.
15. The method in accordance with clause 14, wherein removing the damaged area further comprises removing at least a portion of the first shim and first cloth seal.
16. The method in accordance with clause 14, wherein removing the damaged area further comprises removing the damaged area along a line that extends angularly from the radial edge.
17. The method in accordance with clause 14, wherein coupling the repair patch adjacent the portion of the frame further comprises welding the extension section to the first shim and the first cloth seal.
18. The method in accordance with clause 14, wherein coupling the repair patch adjacent the portion of the frame further comprises welding the repair patch to the frame.
19. The method in accordance with clause 14 further comprising coupling the second cloth seal to the second shim via a weld extending a distance along a circumferential edge of the repair patch.
20. The method in accordance with clause 14 further comprising welding a second damaged area of the first cloth seal, wherein the second damaged area located on an interior portion of the first cloth seal.

## Claims

1. A repair patch (200) for use with a turbine seal (116), said repair patch (200) comprising:
a shim (204) comprising a first side (212) and an opposite second side (214); and
a cloth seal (202) comprising a first section (206) and a second section (208), said cloth seal (202) is coupled to said shim (204), such that said cloth seal (202) is folded over a radial edge (210) of said shim (204) such that said first section (206) substantially covers said first side (212) and said second section (208) substantially covers said second side (214), said second section (208) comprises an extension section (218) that extends from said second side (214) such that at least a portion of said cloth seal (202) overlaps at least a portion of the turbine seal (116) when coupled thereto.

2. The repair patch (200) in accordance with Claim 1, wherein said cloth seal (202) is coupled to said shim (204) via a weld (226) extending a distance along a circumferential edge (222) of said repair patch (200).

3. The repair patch (200) in accordance with Claim 1, wherein a coupling edge (224) of said repair patch (200) is defined opposite said circumferential edge (222), said coupling edge (224) comprising a shim edge (204) and a first section edge that each extend angularly from said radial edge (210).

4. The repair patch (200) in accordance with Claim 3, wherein said extension section (218) comprises an edge that extends substantially parallel to said coupling edge (224).

5. The repair patch (200) in accordance with Claim 1, wherein said coupling edge (224) extends at an angle within a range from approximately 30° to approximately 60° from said circumferential edge (222).

6. The repair patch (200) in accordance with Claim 1, wherein said coupling edge (224) extends at approximately a 45° angle from said circumferential edge (222).

7. The repair patch (200) in accordance with Claim 1, wherein said shim comprises at least two shims (162, 204).

8. A turbine seal (116) for use with a turbine (106), said turbine seal (116) comprising:
a frame (146);
a backing strip (150);
a first shim (162);
a first cloth seal (160) at least partially surrounding said first shim (162), said first shim (162) and said first cloth seal (160) at least partially coupled between said frame (146) and said backing strip (150), wherein at least a portion of said frame (146) extends circumferentially beyond said first shim (162) and said first cloth seal (160); and
a repair patch (200) coupled adjacent to said portion of said frame (146), said repair patch (200) comprising:
a second shim (204) comprising a first side (212) and an opposite second side (214); and
a second cloth seal (202) comprising a first section (206) and a second section (208), said second cloth seal (202) is coupled to said second shim (204), such that said second cloth seal (202) is folded over a radial edge (210) of said second shim (204) such that said first section (206) substantially covers said first side (212) and said second section (208) substantially covers said second side (214), said second section (208) comprises an extension section (218) that extends from said second side (214) such that at least a portion of said second cloth seal (202) overlaps at least a portion of said first cloth seal (160).

9. The turbine seal (116) in accordance with Claim 8, wherein said repair patch (200) is welded (230) to said portion of said frame (146).

10. The turbine seal (116) in accordance with Claim 8, wherein said extension section (218) is welded (228) to said first shim (162) and said first cloth seal (160).

11. The turbine seal (116) in accordance with Claim 10, wherein said weld (228) is around a perimeter (234) of said extension section (218).

12. The turbine seal (116) in accordance with Claim 8, wherein said repair patch (200) is coupled to said turbine seal (116) along a coupling edge (224) that is defined opposite a circumferential edge (222) of said repair patch (200), said coupling edge (224) extends angularly from said radial edge (210).

13. The turbine seal (116) in accordance with Claim 12, wherein said coupling edge (224) extends at approximately a 45° angle from said circumferential edge (222).

14. The turbine seal (116) in accordance with Claim 8, wherein said second shim comprises at least two shims (162, 204).

15. The turbine seal (116) in accordance with Claim 8 further comprising a weld (228) extending a distance along an interior damage area (178) of said first cloth seal (160).
